# EUROPÄISCHE PATENTSCHRIFT

(11) **EP 2 115 274 B1**
(45) Veröffentlichungstag und Bekanntmachung des Hinweises auf die Patenterteilung: **28.04.2010**
(21) Anmeldenummer: 08701688.7
(22) Anmeldetag: 12.02.2008
(51) Int. Cl.: F01D 15/10, H02K 7/18, F02C 7/36, F02C 9/28

(54) **VERFAHREN ZUM BETRIEB EINER KRAFTWERKSANLAGE**
METHOD FOR OPERATING A POWER PLANT
PROCÉDÉ DE FONCTIONNEMENT D'UNE CENTRALE ÉLECTRIQUE

(30) Priorität: 14.02.2007 CH 248072007
(43) Veröffentlichungstag der Anmeldung: 11.11.2009
(73) Patentinhaber: ALSTOM Technology Ltd, 5400 Baden (CH)
(72) Erfinder: HOFFMANN, Jürgen, CH-5417 Untersiggenthal (CH); MEINDL, Thomas, CH-5416 Kirchdorf (CH)
(86) Internationale Anmeldenummer: PCT/EP2008/051634
(87) Internationale Veröffentlichungsnummer: WO 2008/098911

(56) Entgegenhaltungen:
- WO-A-2006/103159
- JP-A- 62 077 098
- US-A- 5 694 026
- US-A1- 2004 119 293

## Beschreibung

### TECHNISCHES GEBIET

Die vorliegende Erfindung bezieht sich auf das Gebiet der Kraftwerkstechnik. Sie betrifft ein Verfahren zum Betrieb einer Kraftwerksanlage gemäss dem Oberbegriff des Anspruchs 1.

### STAND DER TECHNIK

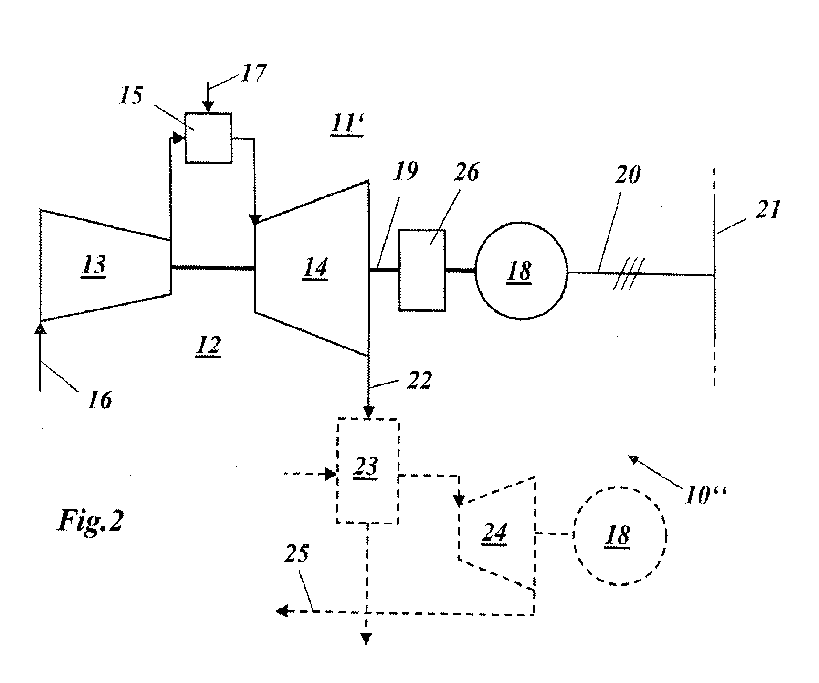

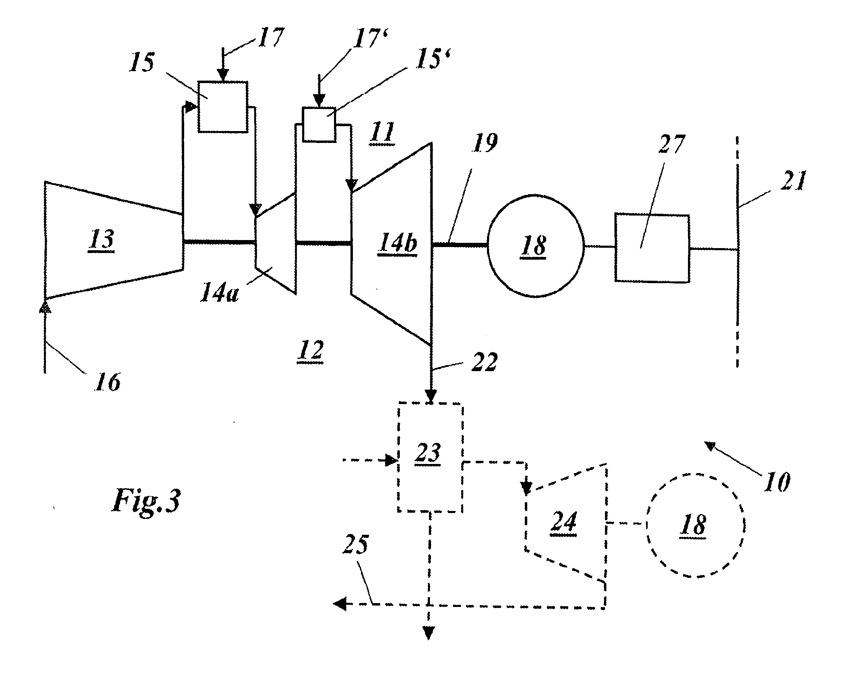

Grosse Kraftwerksanlagen mit Leistungen im Bereich von mehr als 100 MW, bei denen ein Strom erzeugender Generator von einer Gas- und/oder Dampfturbine angetrieben wird und die erzeugte elektrische Leistung in ein Netz mit vorgegebener Netzfrequenz (z.B. 50 oder 60 Hz) einspeist, haben üblicherweise eine feste Kopplung zwischen der (mechanischen oder aerodynamischen) Drehzahl der Turbine und der Netzfrequenz. Der Ausgang des Generators ist dabei über eine Verbindung frequenzgekoppelt mit dem Netz verbunden, während er von der Turbine entweder direkt (1-Wellenanlage) oder über ein mechanisches Getriebe drehzahlgekoppelt angetrieben wird. Derartige Konfigurationen von Kraftwerksanlagen sind in den Fig. 2 und 3 stark vereinfacht wiedergegeben. Mittels Getriebe sind nur feste Übersetzungsverhältnisse zwischen Netzfrequenz und Turbine realisierbar. Es sind aber auch Lösungen denkbar, bei denen der Generator von einer Nutzturbine angetrieben wird, die mit einer von der eigentlichen Gasturbine abweichenden Drehzahl gefahren werden kann.

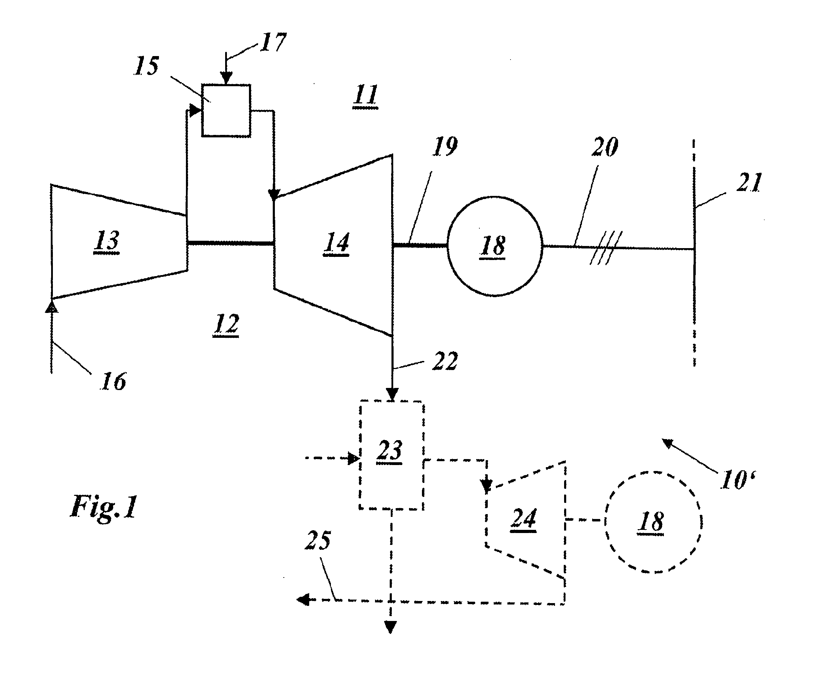

Fig. 1 zeigt in einer stark vereinfachten Darstellung eine Kraftwerksanlage 10' bekannter Art, die mittels einer Gasturbine 12 mit angekoppeltem Generator 18 Strom erzeugt und in ein Netz 21 einspeist. Die Gasturbine 12 und der Generator 18 sind durch eine gemeinsame Welle 19 verbunden und bilden einen 1-Wellen-Turbinenstrang 11. Die Gasturbine umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird.

Die aus der Brennkammer 15 austretenden heissen Gase werden in einer nachfolgenden Turbine 14 unter Arbeitsleistung entspannt und treiben so den Verdichter 13 und den angeflanschten Generator 18 an. Das beim Austritt aus der Turbine noch relativ heisse Abgas kann zusätzlich durch einen nachfolgenden Abhitzedampferzeuger 23 geschickt werden, um in einem separaten Wasser-Dampf-Kreislauf 25 Dampf für den Betrieb einer Dampfturbine 24 zu erzeugen. Eine solche Kombination wird als Kombikraftwerk bezeichnet. Die Dampfturbine 24 kann dabei mit dem Generator 18 auf der der Turbine 14 gegenüberliegenden Seite gekoppelt sein. Sie kann aber auch einen eigenen Generator antreiben.

Bei der 1-Wellen-Anlage der Fig. 1 steht die Drehzahl der Gasturbine 12 in einem festen Verhältnis zur im Generator 18 erzeugten Frequenz der Wechselspannung, die gleich der Netzfrequenz des Netzes 21 sein muss. Bei den heutzutage üblichen grossen Gasturbineneinheiten mit Leistungen von über 100 MW ist der Generatorfrequenz bzw. Netzfrequenz von 60 Hz eine Drehzahl der Gasturbine von 3600 U/min (z.B. Gasturbine GT24 der Anmelderin) und der Generatorfrequenz von 50 Hz eine Drehzahl von 3000 U/min (z.B. Gasturbine GT26 der Anmelderin) zugeordnet.

Soll ein anderes Verhältnis zwischen der Drehzahl der Gasturbine 12 und der Generator- bzw. Netzfrequenz erreicht werden, kann gemäss Fig. 2 in einer Kraftwerksanlage 10" grundsätzlich zwischen der Welle 19 der Gasturbine 12 und dem Generator 18 (Turbinenstrang 11') ein mechanisches Getriebe 26 eingefügt werden, das üblicherweise als Reduziergetriebe ausgebildet ist und damit höhere Drehzahlen und kleinere Bauweisen der Gasturbine 12 ermöglicht. Derartige mechanische Getriebe 26 sind jedoch aus Festigkeitsgründen nur für Leistungen bis 130 MW einsetzbar. Auf der anderen Seite werden die grossen Leistungen pro Gasturbine von über 100 MW und die hohen Wirkungsgrade vor allem mit vergleichsweise langsam rotierenden 1-Wellen-Maschinen erreicht.

Folgende Nachteile resultieren aus der starren Kopplung zwischen Turbinendrehzahl und Netzfrequenz:
- Ein stabiler Betrieb am Netz ist nur eingeschränkt möglich.
- Es kommt zu Leistungseinbrüchen bei der Turbine, bzw. zu hoher thermischer und mechanischer Belastung bei der dynamischen Regelung zur Netzfrequenzstützung durch Anhebung der Gasturbineneintrittstemperatur.
- Eine Netzfrequenz- bzw. Verbraucher-unabhängige Leistungsregelung der Kraftwerksanlage ist nicht möglich.
- Eine Netzfrequenz- bzw. Verbraucher-unabhängige Wirkungsgradoptimierung der Kraftwerksanlage ist nicht möglich.
- Eine Netzfrequenz- bzw. Verbraucher-unabhängige Teillastoptimierung der Kraftwerksanlage ist nicht möglich.
- Eine Emissionsregelung der Gasturbine ist nur eingeschränkt möglich.
- Herkömmlich verliert das Kraftwerk bei Unterfrequenz zunächst Leistung; erst nach Ausgleichen der Minderleistung durch entsprechendes Nachregeln kann das Kraftwerk aktiv durch Mehrleistung das Netz stützen. Umgekehrt erhöht das Kraftwerk bei Überfrequenz zunächst Leistung; erst nach Ausgleichen der Mehrleistung durch entsprechendes Nachregeln kann das Kraftwerk aktiv durch Leistungsreduktion das Netz stützen.
- Es entstehen Transienten bei Frequenzschwankungen:
   ○ Bei Unterfrequenz wird als erstes der Ansaugmassenstrom reduziert; dies führt bei (im ersten Augenblick konstantem Brennstoffmassenstrom) zu einem Überfeuern und in der Regel kurz danach zu einem Unterfeuern durch den Reglereingriff.
   ○ Analog gibt es bei Überfrequenz ein Unterfeuern, gefolgt von einem Überfeuern.
   ○ Diese Transienten führen zu verminderter Lebensdauer und erhöhten Emissionen (NOx bei Überfeuern und CO bei Unterfeuern).
   ○ Zur Frequenzstützung wird bei Unterfrequenz die Heissgastemperatur erhöht mit den nachteiligen Folgen einer Lebensdauerreduktion der Bauteile sowie erhöhter NOₓ-Emissionen.

Aus der US-A-5,694,026 ist ein 1-Wellen-Turbinen-Generator-Satz ohne Untersetzungsgetriebe bekannt, bei dem zwischen dem Ausgang des Generators und dem Netz ein statischer Frequenzumrichter angeordnet ist, mit dessen Hilfe die vom Generator erzeugte Wechselspannungs-Frequenz in die Frequenz des Netzes umgesetzt wird. Beim Starten der Gasturbine wird der Generator als Motor benutzt, der aus dem Netz über den statischen Frequenzumrichter mit Energie versorgt wird.

Aus der US-B2-6,979,914 ist eine Kraftwerksanlage mit einer 1-Wellen-Anordnung aus Gasturbine und Generator bekannt, bei der ebenfalls ein Umrichter zwischen Generatorausgang und Netz vorgesehen ist, um die vom Generator erzeugte Wechselspannung an die Netzfrequenz anzupassen.

Aus dem Artikel von L.J.J Offringa, L.J.J. et al. "A 1600 kW IGBT converter with interphase transformer for high speed gas turbine power plants", Proc. IEEE - IAS Conf. 2000. 4, 8-12 October 2000, Rome, 2000, pp. 2243-2248, ist eine Kraftwerksanlage mit schnell rotierender Gasturbine (18000 U/min) und vergleichsweise kleiner Ausgangsleistung (1600 kW) bekannt, bei der eine Frequenzentkopplung zwischen Generator und Netz durch einen Umrichter. JP 62077098 offenbart ein verfahren zum Betrieb einer Kraftwerksanlage nach dem oberbegriff vom Anspruch 1. Spezielle Regel- und Betriebskonzepte zum Stützen der Netzfrequenz sind diesen Druckschriften jedoch nicht zu entnehmen.

### DARSTELLUNG DER ERFINDUNG

Es ist Aufgabe der Erfindung, ein Verfahren zum Betrieb einer Frequenzentkoppelten Kraftwerksanlage zu schaffen, welches Transienten vermeidet und sich insbesondere durch reduzierte Emissionen und eine erhöhte Lebensdauer der Anlagenkomponenten auszeichnet.

Die Aufgabe wird durch die Gesamtheit der Merkmale des Anspruchs 1 gelöst. Wesentlich für das erfindungsgemässe Verfahren ist, dass bei länger dauernden Änderungen der Netzfrequenz die mechanische oder aerodynamische Drehzahl der Gasturbine konstant gehalten und die Leistung der Gasturbine ohne Verzögerung angepasst wird. Im Gegensatz zu plötzlichen Netzfrequenzänderungen, wie sie, zum Beispiel durch den Trip eines Kraftwerkes oder Zuschalten eines grossen Verbrauchers innerhalb von wenigen Sekunden oder einigen duzend Sekunden entstehen, sind unter länger dauernden Änderungen der Netzfrequenz Ereignisse zu verstehen, bei denen die Netzfrequenz quasistationär über einen längeren Zeitraum auf reduzierter Frequenz betrieben wird. In der Regel versteht man in diesem Zusammenhang unter länger dauernden Änderungen Zeiträume von über 30s. Diese können allerdings auch bis zu mehreren Minuten, in besonderen Fällen sogar bis zu Stunden anhalten.

Gemäss einer Ausgestaltung der Erfindung werden dabei eine Gasturbine mit einer Leistung grösser 100 MW und als elektronische Entkopplungsvorrichtung ein Frequenzumrichter in Form eines Matrixumrichters verwendet.

Eine andere Ausgestaltung zeichnet sich dadurch aus, dass die Betriebsfrequenz sich deutlich von der Netzfrequenz bzw. zweiten Betriebsfrequenz unterscheidet, wobei insbesondere die Netzfrequenz bzw. die Betriebsfrequenz 50 Hz oder 60 Hz beträgt. Allgemein sind für diese Ausgestaltung als deutliche Unterscheidung zwischen Netz und Betriebsfrequenz Abweichungen von mehr als 5% zu versehen. Für die Anwendung von 50 Hz Kraftwerken in 60 Hz Netzen und umgekehrt sind Unterschiede in der Grössenordnung von 20% zu erwarten. Bei Anwendung auf langsamlaufende Grossmaschinen kann die Abweichung auch deutlich über 100 % liegen.

Bevorzugt wird auch als Gasturbine eine Gasturbine mit sequentieller Verbrennung verwendet.

Weiterhin ist von Vorteil, wenn der verwendete Matrixumrichter eine Mehrzahl von in einer (m x n)-Matrix angeordneten, steuerbaren bidirektionalen Schaltern umfasst, welche von einem Regler gesteuert m Eingänge wahlweise mit n Ausgängen verbinden, wobei m grösser n ist, und wobei erste Mittel zur Bestimmung der Vorzeichen der Ströme in den Eingängen und zweite Mittel zur Bestimmung der Vorzeichen der Spannungen zwischen den Eingängen vorgesehen sind, und wobei die ersten und zweiten Mittel mit dem Regler in Wirkverbindung stehen. Bidirektionale Schalter können aus einem Bauteil bestehen aber auch aus mehreren Bauteilen aufgebaut sein. Beispielsweise können zwei anti- parallele Thyristoren mit entgegengesetzter Durchschaltrichtung als steuerbare bidirektionale Schalter verwendet werden. Die Mittel zur Bestimmung der Vorzeichen von Strömen und Spannung können beispielsweise Strom- bzw. Spannungsmesser sein. Alternativ sind z. B. auch binäre Geber, die nur das Vorzeichen ausgeben, anwendbar.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein stark vereinfachtes Schaltbild einer Kraftwerksanlage mit Gasturbine und einem 1-Wellen-Turbinenstrang nach dem Stand der Technik;
- Fig. 2: ein stark vereinfachtes Schaltbild einer Kraftwerksanlage mit Gasturbine und einem mechanischen Getriebe nach dem Stand der Technik;
- Fig. 3: ein stark vereinfachtes Schaltbild einer Kraftwerksanlage mit Gasturbine und einer elektronischen Entkopplungsvorrichtung, wie sie zur Verwirklichung der Erfindung eingesetzt werden kann;
- Fig. 4: den beispielhaften inneren Aufbau eines Matrixumrichters, wie er als elektronische Entkopplungsvorrichtung in einer Anlage nach Fig. 4 zum Einsatz kommen kann; und
- Fig. 5: eine zu Fig. 4 vergleichbare Anlage Einrichtungen zur Durchführung des Verfahrens nach der Erfindung.
- Fig. 6: Unterfrequenzereignis bei fester Kupplung
- Fig. 7: Unterfrequenzereignis mit elektronischer Entkupplung
- Fig. 8: Unterfrequenzereignis mit elektronischer Entkupplung und antizipiertem Unterfrequenzereignis

### WEGE ZUR AUSFÜHRUNG DER ERFINDUNG

In Fig. 3 ist in einem stark vereinfachten Schaltbild eine Kraftwerksanlage mit Gasturbine und einer elektronischen Entkopplungsvorrichtung wiedergegeben, wie sie zur Durchführung des erfindungsgemässen Verfahrens geeignet ist. Die Kraftwerksanlage 10 umfasst eine Gasturbine 12 mit einem Verdichter 13 und sequentieller Verbrennung, bei der eine erste Brennkammer 15 mit einem ersten Brennstoff über eine erste Brennstoffzufuhr 17 Heissgas erzeugt, das in einer ersten Turbine 14a entspannt wird, dann in eine zweite Brennkammer 15' geleitet wird, wo es mit einem zweiten Brennstoff über eine zweite Brennstoffzufuhr 17' eine Zwischenüberhitzung des Heissgases bewirkt, das dann in der zweiten Turbine 14b entspannt wird. Anstelle der im Hinblick auf den Wirkungsgrad besonders günstigen sequentiellen Verbrennung kann aber auch eine einstufige Verbrennung vorgesehen werden. Die übrigen Teile der Anlage entsprechen den Teilen mit gleichem Bezugszeichen in den Fig. 1 oder 2.

Der Generator 18 ist direkt an die Welle 19 der Gasturbine 12 angeflanscht. Damit dreht der Generator 18 mit derselben Drehzahl wie die Gasturbine 12. Zwischen dem Ausgang des Generators 18 und dem Netz 21 ist nunmehr jedoch eine elektronische Entkopplungsvorrichtung 17 angeordnet, die eine Entkopplung der im Generator 18 erzeugten Betriebsfrequenz bzw. der Drehzahl der Gasturbine 12 von der vorgegebenen Netzfrequenz des Netzes bewirkt.

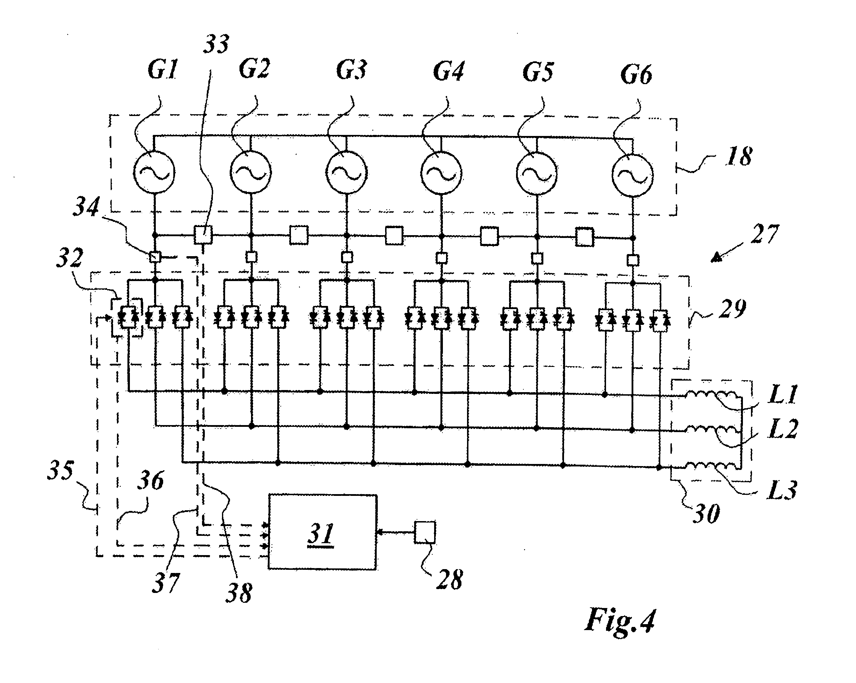

Die elektronische Entkopplungsvorrichtung 27 ist - um die Verlustleistung zu begrenzen - vorzugsweise als Matrixumrichter ohne Gleichstromzwischenkreis ausgebildet. Ein solcher Matrixumrichter, der aufgrund seiner Ansteuerung besonders verlustarm arbeitet, ist in der EP-A2-1 199 794 im Aufbau und in der Wirkungsweise beschrieben worden. Weitere Ausführungen zu einem solchen Matrixumrichter sind in der EP-A1-1 561 273, in der DE-A1-10 2004 016 453, der DE-A1-10 2004 016 463 und der DE-A1-10 2004 016 464 gemacht worden. In Fig. 4 ist das Prinzipschaltbild eines Matrixumrichters mit 6 Eingangsphasen und 3 Ausgangsphasen dargestellt. Der Matrixumrichter (27) verbindet in einer zeitlichen Abfolge 6 Phasen G1,..,G6 eines Generators 18 als Quelle mit 3 Phasen L1,..,L3 einer Last 30. Der dazu benötigte Leistungsteil 29 umfasst 18 bidirektionale Schalter 32 in Form von antiparallel geschalteten Thyristoren (im allgemeinen Fall gibt es m x n Schalter für m Eingangs/Quellen-Phasen und n Ausgangs/Last-Phasen). Die Schalter 32 sind in einer (6 x 3)-Matrix angeordnet. Für die Ansteuerung der Schalter 32 ist eine Steuerung oder ein Regler 31 vorgesehen, der von einem Taktgeber 28 Zeitsignale (eine Taktfrequenz) erhält. Der Schaltzustand der Schalter 32 (EIN, AUS) wird überwacht und jeweils über eine erste Signalleitung 36 an den Regler 31 gemeldet. Die Schalter 32 werden von dem Regler 31 jeweils über eine Steuerleitung 35 angesteuert.

In den einzelnen Phasen G1,..,G6 des Generators 18 ist jeweils eine Strommesseinrichtung 34 angeordnet, die das Vorzeichen des Phasenstromes über eine zweite Signalleitung 37 an den Regler 31 meldet. Weiterhin sind zwischen den Phasen G1,..,G6 des Generators 18 Spannungsmesseinrichtungen 33 angeordnet, die das Vorzeichen der jeweiligen Phasendifferenzspannung über eine dritte Signalleitung 38 an den Regler 31 melden. Zu den Einzelheiten des Betriebsablaufs des Matrixumrichters wird auf die o.g. Druckschriften verwiesen.

Mit der Entkopplungsvorrichtung 27, insbesondere in Form eines Matrixumrichters der beschriebenen Art, ergeben sich die folgenden Vorteile einer elektronischen Entkoppelung:
- Eine Stützung der Netzfrequenz des Netzes 21 wird in einem weiten Netzfrequenzbereich möglich. Während bei starrer Frequenzkopplung eine Netzfrequenzstützung im Bereich von 5-6% der Netzfrequenz erzielt werden kann, lässt sich durch die elektronische Entkopplung eine Stützung im Bereich von bis zu 20% erreichen.
- Eine Anpassung der Betriebsoptima (Leistung, Wirkungsgrad) in Abhängigkeit von den Umgebungsbedingungen (z.B. der Eintrittstemperatur) ist möglich.
- Die Leistung kann erhöht werden.
- Der Wirkungsgrad kann verbessert werden.
- Die Flexibilität bei Lastschwankungen und die Lebensdauer der Turbine können verbessert werden.
- Die Turbine kann weiter drehzahlkonstant laufen. Bisher auftretende zusätzliche thermische oder mechanische Belastungen, welche durch Maßnahmen zur Drehzahlstützung notwendig waren, entfallen.
- Die Emissionswerte können verbessert werden. Der zusätzliche Freiheitsgrad einer variablen Drehzahl erlaubt eine gewünschte Leistung bei einer höheren oder niedrigeren Drehzahl anzufahren. Damit verbunden sind niedrigere oder höhere Turbineneintritts-Temperaturen mit dem Effekt der Beeinflussung der Emissionen von CO₂ und NOx. Insbesondere können erhöhte Emissionen im Fall der Frequenzstützung vermieden werden.

Die vorrangige Möglichkeit, gemäss der Erfindung einen Turbinenstrang - Turbine und Generator - innerhalb einer Kraftwerksanlage unabhängig von der Netzfrequenz stabil bei einer gewünschten (Design-)Drehzahl betreiben zu können, unterstützt die Stabilisierung von Stromnetzen. Bei Frequenzeinbrüchen muss das Kraftwerk in der Lage sein, die bei normaler Netzfrequenz abgegebene Leistung zu halten, bzw. idealerweise sogar eine erhöhte Leistung an das Stromnetz abzugeben. Bisherige Kraftwerkssysteme können dies nur in einem begrenzten Mass sicherstellen. Die Netzfrequenzabsenkung spürt ein fest mit der Netzfrequenz gekoppeltes System als unerwünschte Drehzahlabsenkung auf der Turbine und dem Generator. Dabei sinkt die abgegebene Leistung bei ansonsten gleichen Betriebsparametern. Ein Gasturbinensystem reagiert in diesem Fall mit einer deutlich erhöhten Brennstoffzufuhr, was zu einer erhöhten HeissgasTemperatur innerhalb der Turbine führt. Diese wiederum reduziert erheblich die Lebensdauer der Turbine, was die Betriebskosten der Anlage steigert. Der Schadstoffausstoss, in Form von NOX, erhöht sich in dieser Betriebsphase ebenfalls deutlich. Somit sind bereits zwei Grenzen definiert, die eine Leistungserhöhung bei Netzfrequenzabfall stark einschränken - Lebensdauer und Emissionen. Als dritter Aspekt spielt die mechanische Verträglichkeit eine Rolle. Starke Frequenzabfälle über 6% führen zum Abschalten von Kraftwerksanlagen, da diese mechanisch nicht in der Lage sind, mit entsprechen reduzierten Drehzahlen betrieben werden zu können.

Im Falle eines Netzfrequenz-entkoppelten Systems entfallen alle oben geschilderten Nachteile. Es gibt keine Einschränkung bezüglich minimal zulässiger Frequenzschwankungen, da der Turbinenstrang keine aufgeprägte Drehzahlschwankung spürt. Demzufolge treten auch keine Schadstofferhöhungen und Einbussen bei der Lebensdauer auf.

Ein weiterer positiver Aspekt eines Netzfrequenz-unabhängigen Kraftwerksystems, ist die bessere Anpassungsfähigkeit einer Anlage an unterschiedliche Standortbedingungen. Die bereits erwähnte Netzstabilität ist ein wesentlicher Aspekt, der entscheidend vom Standort abhängt. Daneben sind es vor allem unterschiedliche Umgebungsbedingungen, wie Aussentemperaturen, Luftfeuchtigkeit, auch Brennstoffzusammensetzung, welche den Betriebzustand eines Kraftwerks beeinflussen. Der zusätzliche Freiheitsgrad der Netzfrequenz-unabhängigen Drehzahlregelung erlaubt es entsprechend den aktuellen Umgebungsbedingungen jeweils optimierte Betriebsbedingungen zu erzeugen. Dabei sind sowohl Wirkungsgradverbesserungen oder auch Leistungssteigerungen möglich.

Wie bereits oben erwähnt, wird durch die drehzahlmässige Entkopplung der Gasturbine von der Netzfrequenz bzw. der Betriebsfrequenz eines angeschlossenen Verbrauchers ein verbesserter Betrieb der Gasturbine möglich: Die Gasturbine wird in allen Betriebsbereichen unabhängig von der Netzfrequenz bzw. Betriebsfrequenz des Verbrauchers so nahe wie möglich an der aerodynamischen Designdrehzahl betrieben, um die Performance, d.h. Wirkungsgrad und Leistung, zu optimieren.

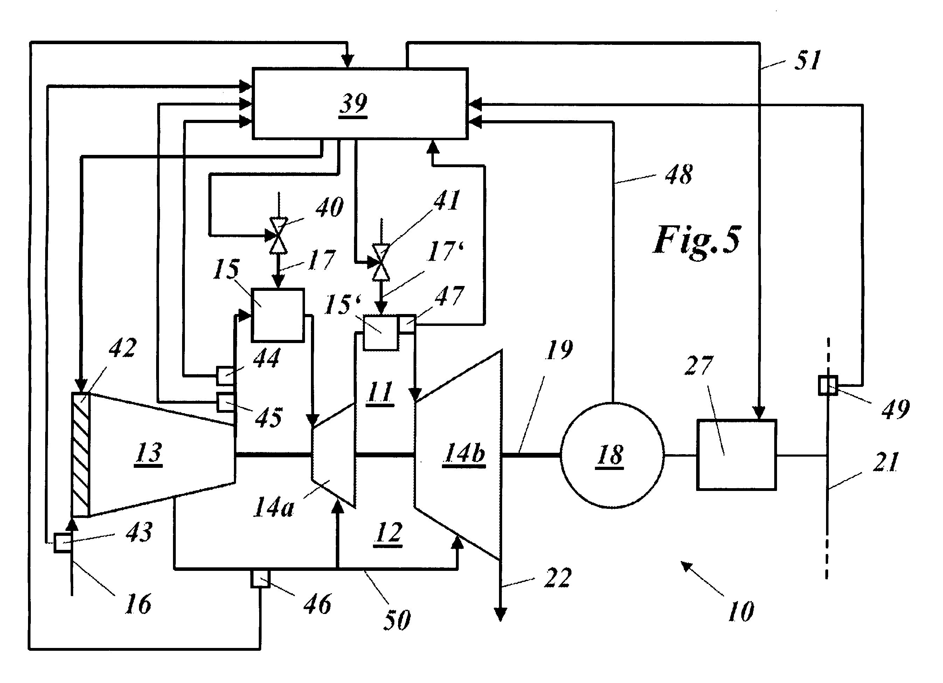

In Fig. 5 ist ein vereinfachtes Schema einer Kraftwerksanlage 10 wiedergegeben, das für ein Betriebsverfahren gemäss der Erfindung ausgelegt ist. Der Turbinenstrang 11 mit der Gasturbine 12 und dem Generator 18 entsprechen denen in Fig. 4. Dies gilt auch für die elektronische Entkopplungsvorrichtung 27 und das angeschlossene Netz 21. Das Netz 21 kann ein allgemeines Versorgungsnetz, aber auch ein Bahnstromnetz sein. Auf die Darstellung einer möglichen zusätzlichen Dampfturbine mit entsprechendem Wasser/Dampf-Kreislauf ist hier aus Platzgründen verzichtet worden.

Zur Steuerung oder Regelung der Gasturbine 12 dienen mindestens eine Reihe verstellbarer Verdichterleitschaufeln 42 am Eingang des Verdichters 13 sowie Regelventile 40 und 41 in der Brennstoffzufuhr 17 bzw. 17' zu den Brennkammern 15, 15'. Die entsprechenden Steuersignale kommen aus einer Steuerung oder Regelung 39 nach Massgabe bestimmter Eingangsparameter, die einzeln oder in wählbarer Kombination verwendet werden können. Ein möglicher Parameter ist die Verdichtereintrittstemperatur, die mit einem am Lufteinlass 16 angeordneten ersten Messwertaufnehmer 43 gemessen wird. Andere mögliche Parameter sind die Verdichterendtemperatur und der Verdichterenddruck, die mit einem zweiten und dritten Messwertaufnehmer 44 bzw. 45 am Ausgang des Verdichters gemessen werden. Ein weiterer Messwertaufnehmer 46, der an einer Kühlluftversorgung 50 vom Verdichter 13 zu thermisch belasteten Bauteilen der Gasturbine 12, z.B. in den beiden Turbinen 14a und 14b, angeordnet ist, misst den Druck und/oder die Temperatur und/oder die Durchflussmenge der Kühlluft. Ein weiterer Messwertaufnehmer 47 kann an der zweiten Brennkammer 15' angeordnet sein, um den Druck in dieser Brennkammer zu messen. Die Drehzahl der Gasturbine 12 kann beispielsweise am Generator 18 abgenommen und über eine Messleitung 48 in die Regelung 39 eingegeben werden. Für die Messung der Netzfrequenz im Netz 21 kann ein Netzfrequenzaufnehmer 49 vorgesehen werden.

Die Regelung 39 kann dann die aerodynamische oder mechanische Drehzahl der Gasturbine 12 auf einen konstanten Wert regeln, ohne dass die Drehzahl in anderer Weise von der Netzfrequenz des Netzes 21 beeinflusst wird.

Die Regelung der Gasturbinendrehzahl kann bei völliger Entkopplung der Gasturbine 12 vom Netz 21 an der Gasturbine 12 über entsprechende Parameter, wie Brennstoffmassenstrom und Stellung der Verdichtervorleitreihe, durchgeführt werden. Die Regelung der Drehzahl kann alternativ beispielsweise auch dadurch erfolgen, dass die in der Regelung 39 der Gasturbine berechnete Solldrehzahl 51 an den Regler 31 der Entkopplungsvorrichtung 27 übertragen wird und über den Generator die Drehzahl auf die Gasturbine 12 aufgezwungen wird. Der Generator 18 stützt sich über die Entkopplungsvorrichtung 27 dabei gegen das im Vergleich zur Gasturbine 12 quasi statische Netz 21 ab und zwingt durch die Regelung des Frequenzverhältnisses zwischen Netz F und mechanischer Drehzahl n_{mech} der Gasturbine die Drehzahl n_{mech} auf. Die Entkopplungsvorrichtung 27 arbeitet in diesem Fall als ein variables Getriebe mit geregeltem Übersetzungsverhältnis zwischen mechanischer Drehzahl der Gasturbine n_{mech} und Netzfrequenz F.

Nach der Erfindung fährt die Gasturbine bei Netzfrequenzschwankungen unabhängig von der Netzfrequenz nach der aerodynamischen Designdrehzahl. Durch dieses Konzept werden in den folgenden Punkten Verbesserungen im Betriebsverhalten und Lebensdauerverbrauch der Gasturbine erreicht:
- Herkömmlich verliert das Kraftwerk bei Unterfrequenz zunächst Leistung; erst nach Ausgleichen der Minderleistung durch entsprechendes Nachregeln kann das Kraftwerk aktiv durch Mehrleistung das Netz stützen. Umgekehrt erhöht das Kraftwerk bei Überfrequenz zunächst Leistung, erst nach Ausgleichen der Mehrleistung durch entsprechendes Nachregeln kann das Kraftwerk aktiv durch Leistungsreduktion das Netz stützen.
- Diese Verzögerungen entfallen bei dem neuen Konzept und das Kraftwerk kann vom aktuellen Lastpunkt aus sofort auflasten und die Frequenz stützen.
- Reduktion der Transienten bei Frequenzschwankungen:
   ○ Bei Unterfrequenz wird als erstes der Ansaugmassenstrom reduziert; dies führt (bei im ersten Augenblick konstantem Brennstoffmassenstrom) zu Überfeuern und in der Regel kurz danach zu einem Unterfeuern durch den Reglereingriff.
   ○ Analog gibt es bei Überfrequenz ein Unterfeuern, gefolgt von einem Überfeuern.
   ○ Mit dem neuen netzfrequenzunabhängigen Betriebskonzept werden diese Transienten vermieden und damit der Lebensdauerverbrauch reduziert und Emissionen, die zwangsweise bei transientem Betrieb jenseits der Designdrehzahl auftreten (NOx bei Überfeuern und CO bei Unterfeuern) vermieden.

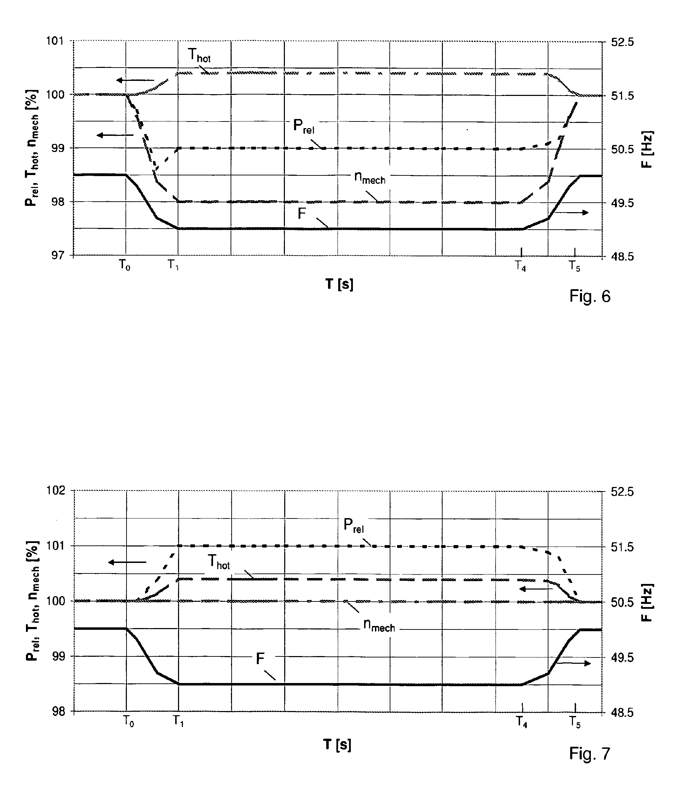

In den Fig. 6 bis 8 sind Beispiele für länger dauernde Unterfrequenzereignisse schematisch dargestellt. Sie sind für ein 50 Hz Netz 21 beschrieben, sind aber analog auch für ein 60 Hz Netz 21 oder anderer Auslegungsfrequenz anwendbar. Durch Analogie erschliessen sich hiermit für den Fachmann auch die entsprechenden Konzepte für Überfrequenzereignisse. Störsignale, hochfrequente kleine Variationen der Netzfrequenz F oder Rauschen sind vernachlässigt und nicht dargestellt.

In Fig. 6 ist der Verlauf eines länger dauernden Unterfrequenzereignisses für eine herkömmliche Anlage mit fester Kupplung zwischen Netz 21 und Gasturbine 12 schematisch dargestellt. Die Gasturbine 12 wird bis zur Zeit T₂ bei Volllast und Auslegungsdrehzahl betrieben. Zwischen Zeit T₂ und T₃ fällt die Netzfrequenz F von 50 Hz auf 49 Hz. Bei fester Kupplung ans Netz 21 reduziert sich entsprechend die mit der Auslegungsdrehzahl normierte Drehzahl n_{mech} der Gasturbine 12 von 100% zu 98%. Vernachlässigt man die bei einer Drehzahlreduktion frei werdende kinetische Energie des Wellenstrangs, so nimmt die relative Leistung der Gasturbine Pᵣₑₗ zunächst proportional zur Drehzahl n_{mech} ab. Dabei ist Pᵣₑₗ die relative Leistung Pᵣₑₗ bezogen auf die Volllastleistung bei 100% Drehzahl. Unter der Annahme, das die Regelung der Gasturbine 12 einen Anstieg der Heissgastemperatur aufgrund des mit dem Drehzahlabfall reduzierten Ansaugmassenstromes verhindert, bleibt die Heissgastemperatur Tₕₒₜ zunächst konstant. Sie wird in diesem Beispiel erst mit kurzer Verzögerung, als Antwort der Reglung 39 auf den drehzahlbedingten Leistungsabfall, angehoben. Diese Anhebung der Heissgastemperatur Tₕₒₜ auf 100,4 % der Volllast-Heissgastemperatur führt dazu, dass der Leistungsabfall teilweise ausgeglichen wird und die Gasturbine (12) in diesem Beispiel während des längeren Unterfrequenzereignisses mit 99 % relativer Leistung Pᵣₑₗ bei nur 98% normierter mechanischer Drehzahl n_{mech} betrieben wird.

Ab dem Zeitpunkt T₄, an dem die Netzfrequenz F beginnt sich wieder zu erholen, steigt entsprechend die normierte mechanische Drehzahl n_{mech} und resultierend auch die relative Leistung n_{mech} der Gasturbine 12. Während des Anstieges der Netzfrequenz zwischen T₄ und T₅ wird die relative Leistung der Gasturbine Pᵣₑₗ, die vom Netz 21 geforderte Leistung für Frequenzstützung überschreiten und entsprechend wird die Heissgastemperatur Tₕₒₜ wieder reduziert bis beim Zeitpunkt T₅ normaler Volllastbetrieb bei Auslegungstemperatur erreicht wird.

Die Heissgastemperatur Tₕₒₜ kann erst wieder auf ihren Auslegungswert reduziert werden, wenn die Netzfrequenz F zwischen T₄ und T₅ zu ihrem Nominalwert 50 Hz zurückkehrt. Mit der Anhebung der Heissgastemperatur Tₕₒₜ über den Volllastwert ist ein erhöhter Lebensdauerverbrauch verbunden. Je nach Netzanforderungen kann ein Kompromiss zwischen Leistungsbereitstellung für Frequenzunterstützung und Lebensdauerverbrauch eingegangen werden.

Fig. 7 zeigt schematisch den Verlauf der Betriebsparameter während des selben länger dauernden Unterfrequenzereignisses anhand eines Beispieles für eine Anlage mit elektrischer Entkopplung zwischen Netz 21 und Gasturbine 12. In diesem Fall wird trotz des Abfalls der Netzfrequenz F von 50 Hz auf 49 Hz die normierte mechanische Drehzahl n_{mech} der Gasturbine 12 auf 100% gehalten. Entsprechend bleibt die relative Leistung Pᵣₑₗ und Heissgastemperatur Tₕₒₜ der Gasturbine 12 zu Beginn des Unterfrequenzereignisses unmittelbar nach T₂ zunächst konstant. Erst als Reaktion auf einen nennenswerten Einbruch der Netzfrequenz F reagiert der Regler und erhöht die Heissgastemperatur Tₕₒₜ, um damit auch die relative Leistung Pᵣₑₗ der Gasturbine zu erhöhen. In diesem Beispiel kann durch eine Anhebung der Tₕₒₜ auf 100.4% nicht nur einen Abfall der Gasturbinenleistung vermieden werden, sondern eine relative Leistung Pᵣₑₗ von 101% der Volllastleistung an das Netz 21 abgeben werden. Ab dem Zeitpunkt T₄ erholt sich die Netzfrequenz F und in Folge können die relative Leistung Pᵣₑₗ und entsprechend die Tₕₒₜ reduziert werden, bis zum Zeitpunkt T₅ wieder normaler Volllastbetrieb erreicht wird.

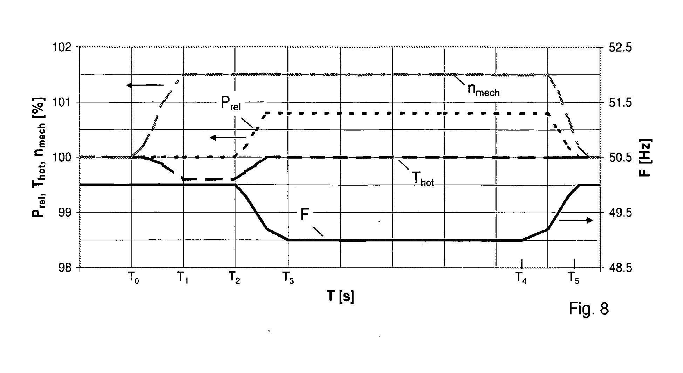

In Fig. 8 ist schematisch der Verlauf eines antizipierten Unterfrequenzereignisses mit elektronischer Entkupplung dargestellt. In diesem Beispiel ist der Operator über ein bevorstehendes Ereignis, wie zum Beispiel die Abschaltung eines grösseren Kraftwerkes vom Netz 21 oder das Zuschalten eines grösseren Verbrauchers an das Netz 21, dass einen Frequenzeinbruch zu Folge haben kann, benachrichtigt. Entsprechend wählt er zu dem Zeitpunkt T₀ einen Bereitschaftsmodus der Gasturbine 12 an. Zur Vorbereitung auf das Unterfrequenzereignis steigt jetzt die mechanische Drehzahl n_{mech} der Gasturbine 12 und erreicht zum Zeitpunkt T₁ beispielsweise 101.5 %. Um die Last konstant auf der Auslegungsvolllast zu halten, wird entsprechend der erhöhten Drehzahl n_{mech} die Heissgastemperatur Tₕₒₜ reduziert. Dabei wird gegenüber einem Betrieb bei der Auslegungsdrehzahl 100% und Auslegungs- Heissgastemperatur evtl. eine Wirkungsgradeinbusse in Kauf genommen.

Zum Zeitpunkt T₂ beginnt das antizipierte Unterfrequenzereignis. Aufgrund der Entkopplung von Gasturbinendrehzahl n_{mech} und Netzfrequenz F kann die Gasturbine 12 weiter auf der erhöhten Drehzahl n_{mech} betrieben werden. Entsprechend der bei der Erhöhung der Drehzahl n_{mech} zwischen Zeit T₀ und T₁ durchgeführten Absenkung der Heissgastemperatur Tₕₒₜ, kann jetzt die Heissgastemperatur Tₕₒₜ zur Leistungssteigerung auf den Volllastwert erhöht werden. Resultierend wird die Gasturbine bei Auslegungsheissgastemperatur mit erhöhter Drehzahl n_{mech} betrieben und kann in diesem Beispiel zur Frequenzunterstützung eine über der Volllastleistung liegende normierte Leistung abgeben. Diese liegt in diesem Beispiel bei 100.8%. Dies kann ohne die sonst für Frequenzunterstützung übliche Inkaufnahme von Lebensdauereinbussen realisiert werden. Ab dem Zeitpunkt T₄ erholt sich die Netzfrequenz F und in Folge können die relative Leistung Pᵣₑᵢ und entsprechend die Drehzahl n_{mech} reduziert werden, bis zum Zeitpunkt T₅ wieder normaler Volllastbetrieb erreicht wird.

Für den Fall, dass es sich um eine Anwendung in einem Kombikraftwerk hält, ist zu berücksichtigen, dass, um die Kraftwerksleistung vor dem antizipierten Unterfrequenzereignis in der Periode von T₁ bis T₂ konstant zu halten, evtl. die Gasturbinenleistung Pᵣₑₗ angehoben werden muss. Durch die erhöhte Drehzahl n_{mech} wird der Massenstrom und damit das Druckverhältnis über die Turbine gesteigert. Ausserdem wird die Heissgastemperatur der Gasturbine gesenkt. Beides hat eine Abnahme der Turbinenaustrittstemperatur zur Folge, was die Leistung der Dampfturbine trotz des erhöhten Abgasmassenstromes negativ beeinflussen kann.

Würde, wie in den Beispielen von Fig. 6 und Fig. 7, während des Unterfrequenzereignisses ausserdem noch, unter der für Frequenzunterstützung üblichen Inkaufnahme von Lebensdauereinbussen, die Heissgastemperatur Tₕₒₜ über den Auslegungswert erhöht, würde die Leistung der Gasturbine Pᵣₑₗ noch weiter über den Volllastwert erhöht.

Je nach Betriebszustand der Gasturbine und dem Fahrkonzept der Gasturbine 12 wird eine Kompensation des mit einer Drehzahlerhöhung verbundenen Leistungszuwachses nicht über die Tₕₒₜ, sondern über einen anderen Regelparameter, wie z.B. der verstellbaren Verdichterleitschaufeln 42, oder einer Kombination von Regelparametern realisiert.
Die in den Figuren gezeigten relativen Leistungen Pᵣₑₗ beziehen sich auf die Leistung bei quasistationärem Betrieb. Der dynamische Leistungsanteil, wie er bei einer Drehzahländerung des Wellenstranges Auftritt, ist vernachlässigt.

Analoge Fahrkonzepte sind für Gasturbinen 12 mit sequentieller Verbrennung denkbar. Dabei besteht prinzipiell die Möglichkeit die Tₕₒₜ beider Brennkammern 15, 15' zur Regelung zu verwenden oder nur die Tₕₒₜ einer Brennkammer 15, 15' zu ändern. Die Kombinationen mit weiteren Parametern ist hier ebenfalls, je nach Fahrkonzept und Betriebspunkt, vorzusehen.

Weitere Prozessgrössen wie Massenströme, Kompressorenddruck, Kompressoraustrittstemperatur, Kühllufttemperaturen und Drücke sowie die Abgasparameter ändern sich in dem Fachmann bekannter Weise abhängig von dem gewählten Fahrkonzept.

Die Verhältnisse der Einflüsse von Drehzahl n_{mech} und Heissgastemperatur Tₕₒₜ auf die Gasturbinenleistung Pᵣₑₗ, sowie der dynamische Ablauf der Regelung sind stark von der Bauart der Gasturbine 12 und den implementierten Regler und Regelparametern abhängig. Beispielsweise ist der Einfluss der Heissgastemperatur Tₕₒₜ einer zweiten Brennkammer 15' bei einer Gasturbine 12 mit sequentieller Verbrennung signifikant höher als der Einfluss einer ersten Brennkammer 15. Abhängig von Auslegungskriterien der Gasturbine 12, wie z.B. den mechanischen, aerodynamischen und Kühlungsanforderungen, sowie den Netzanforderungen kann das Fahrkonzept der Gasturbine 12 entsprechend den gezeigten Ausführungsbeispielen optimiert werden. Dabei sind die Fahrkonzepte nicht auf die dargestellten Beispiele beschränkt, sondern können durch den Fachmann entsprechend den Anforderungen kombiniert und erweitert werden.

### BEZUGSZEICHENLISTE

- 10,10',10": Kraftwerksanlage
- 11,11': Turbinenstrang
- 12: Gasturbine
- 13: Verdichter
- 14,14a,b: Turbine
- 15,15': Brennkammer
- 16: Lufteinlass
- 17,17': Brennstoffzufuhr
- 18: Generator
- 19: Welle
- 20: Netzverbindung (frequenzgekoppelt)
- 21: Netz
- 22: Abgasauslass
- 23: Abhitzedampferzeuger
- 24: Dampfturbine
- 25: Wasser-Dampf-Kreislauf
- 26: Getriebe (mechanisch)
- 27: Entkopplungsvorrichtung
- 28: Taktgeber
- 29: Leistungsteil
- 30: Last
- 31: Regler
- 32: Schalter (bidirektional)
- 33: Spannungsmesseinrichtung
- 34: Strommesseinrichtung
- 35: Steuerleitung
- 36,..,38: Signalleitung
- 39: Regelung
- 40,41: Steuerventil
- 42: verstellbare Verdichterleitschaufeln
- 43,..,47: Messwertaufnehmer
- 48: Messleitung (Drehzahl)
- 49: Netzfrequenzaufnehmer
- 50: Kühlluftversorgung
- 51: Generatorsolldrehzahl
- Tₕₒₜ: Heissgastemperatur vor Turbineneintritt der Gasturbine
- Pᵣₑₗ: relative Leistung der Gasturbine
- n_{mech}: normierte mechanische Drehzahl der Gasturbine
- F: Netzfrequenz in Hz
- T₀: Zeitpunkt: Start der Anhebung der Gasturbinendrehzahl n_{mech}
- T₁: Zeitpunkt: Gasturbinedrehzahl n_{mech} angehoben
- T₂: Zeitpunkt: Begin der Netzfrequenzabsenkung
- T₃: Zeitpunkt: Netzfrequenzabsenkung abgesenkt
- T₄: Zeitpunkt: Begin der Netzfrequenzerholung
- T₅: Zeitpunkt: Netzfrequenz erreicht wieder Nominalwert
- G1,..,G6: Phase (Generator)
- L1,..,L3: Phase (Last)

## Patentansprüche

1. Verfahren zum Betrieb einer Kraftwerksanlage (10) mit einem Turbinenstrang (11) aus einer Gasturbine (12) und einem von der Gasturbine (12) direkt angetriebenen, Wechselstrom mit einer Betriebsfrequenz erzeugenden Generator (18), dessen Ausgang mit einem Netz (21) mit vorgegebener Netzfrequenz (F) in Verbindung steht, wobei zwischen dem Generator (18) und dem Netz (21) eine elektronische Entkopplungsvorrichtung (27) angeordnet ist, welche die Betriebsfrequenz von der Netzfrequenz (F) entkoppelt, **dadurch gekennzeichnet, dass** bei länger dauernden Änderungen der Netzfrequenz die mechanische oder aerodynamische Drehzahl der Gasturbine (12) konstant gehalten und die Leistung der Gasturbine (12) ohne Verzögerung angepasst wird.

2. Verfahren nach Anspruch 1, **dadurch gekennzeichnet, dass** eine Gasturbine (12) mit einer Leistung grösser 100 MW und als elektronische Entkopplungsvorrichtung (27) ein Frequenzumrichter in Form eines Matrixumrichters verwendet werden.

3. Verfahren nach Anspruch 1 oder 2, **dadurch gekennzeichnet, dass** die Betriebsfrequenz sich deutlich von der Netzfrequenz bzw. zweiten Betriebsfrequenz unterscheidet.

4. Verfahren nach Anspruch 3, **dadurch gekennzeichnet, dass** die Netzfrequenz bzw. die Betriebsfrequenz 50 Hz oder 60 Hz beträgt.

5. Verfahren nach einem der Ansprüche 1 bis 4, **dadurch gekennzeichnet, dass** als Gasturbine (12) eine Gasturbine mit sequentieller Verbrennung verwendet wird.

6. Verfahren nach Anspruch 2, **dadurch gekennzeichnet, dass** der Matrixumrichter eine Mehrzahl von in einer (m x n)-Matrix angeordneten, steuerbaren bidirektionalen Schaltern (32) umfasst, welche von einem Regler (31) gesteuert m Eingänge wahlweise mit n Ausgängen verbinden, wobei m grösser n ist, und wobei erste Mittel (34) zur Bestimmung der Vorzeichen der Ströme in den Eingängen und zweite Mittel (33) zur Bestimmung der Vorzeichen der Spannungen zwischen den Eingängen vorgesehen sind, und wobei die ersten und zweiten Mittel (34 bzw. 33) mit dem Regler (31) durch Signalleitungen (38) verbunden sind.

7. Verfahren nach Anspruch 1, **dadurch gekennzeichnet, dass** durch die elektronische Entkopplungsvorrichtung (27) Emissionspeaks bei Schwankungen der Netzfrequenz vermieden werden.

8. Verfahren nach Anspruch 1, **dadurch gekennzeichnet, dass** vor einem antizipierten Unterfrequenzereignis die Drehzahl (n_{mech}) der Gasturbine (12) angehoben wird.

9. Verfahren nach Anspruch 1, **dadurch gekennzeichnet, dass** vor einem antizipierten Überfrequenzereignis die Drehzahl (n_{mech}) der Gasturbine (12) reduziert wird.

10. Verfahren nach einem der Ansprüche 8 oder 9, **dadurch gekennzeichnet, dass** die Kraftwerksleistung während der Drehzahlanpassung der Gasturbine (12) konstant gehalten wird.

11. Verfahren nach Anspruch 10, **dadurch gekennzeichnet, dass** die Kraftwerksleistung durch Anpassung der Turbineneintrittstemperatur ((Tₕₒₜ) und/ oder der Stellung der verstellbaren Verdichterleitschaufeln (42) der Gasturbine (12) konstant gehalten wird.

12. Verfahren nach Anspruch 8, **dadurch gekennzeichnet, dass** die Kraftwerksleistung vor einem antizipierten Unterfrequenzereignis konstant gehalten wird und bei Unterfrequenz über die Nominalleistung angehoben wird.

## Claims

1. Method for operation of a power station (10) having a turbine power train (11) comprising a gas turbine (12) and a generator (18) which is driven directly by the gas turbine (12) and produces alternating current at an operating frequency, and whose output is connected to a grid system (21) with a given grid system frequency (F), wherein an electronic decoupling apparatus (27) is arranged between the generator (18) and the grid system (21), and decouples the operating frequency from the grid system frequency (F), **characterized in that**, in the event of relatively long-lasting changes in the grid system frequency, the mechanical or aerodynamic rotation speed of the gas turbine (12) is kept constant, and the power of the gas turbine (12) is matched without any delay.

2. Method according to Claim 1, **characterized in that** a gas turbine (12) with a rating of more than 100 MW is used, and a frequency converter in the form of a matrix converter is used as an electronic decoupling apparatus (27).

3. Method according to Claim 1 or 2, **characterized in that** the operating frequency differs significantly from the grid system frequency, or a second operating frequency.

4. Method according to Claim 3, **characterized in that** the grid frequency, or the second operating frequency, is 50 Hz or 60 Hz.

5. Method according to one of Claims 1 to 4, **characterized in that** a gas turbine with sequential combustion is used as the gas turbine (12).

6. Method according to Claim 2, **characterized in that** the matrix converter comprises a plurality of controllable bidirectional switches (32) which are arranged in an (m × n) matrix and, controlled by a regulator (31) selectively connect m inputs to n outputs, where m is greater than n, and wherein first means (34) are provided for determining the mathematical signs of the currents in the inputs, and second means (33) are provided for determining the mathematical signs of the voltages between the inputs, and wherein the first and the second means (34 and 33 respectively) are connected to the regulator (31) by signal lines (38).

7. Method according to Claim 1, **characterized in that** emission peaks in the event of fluctuations in the grid system frequency are avoided by the electronic decoupling apparatus (27).

8. Method according to Claim 1, **characterized in that** the rotation speed (n_{mech}) of the gas turbine (12) is increased before an anticipated low-frequency event.

9. Method according to Claim 1, **characterized in that** the rotation speed (n_{mech}) of the gas turbine (12) is reduced before an anticipated high-frequency event.

10. Method according to one of Claims 8 or 9, **characterized in that** the power station power is kept constant during the rotation-speed matching of the gas turbine (12).

11. Method according to Claim 10, **characterized in that** the power station power is kept constant by matching the turbine inlet temperature (Tₕₒₜ) and/or the position of the adjustable compressor guide vanes (42) of the gas turbine (12).

12. Method according to Claim 8, **characterized in that** the power station power is kept constant before an anticipated low-frequency event, and is raised above the nominal power in the event of a low frequency.

## Revendications

1. Procédé de conduite d'une centrale électrique (10) qui présente une ligne de turbine (11) constituée d'une turbine à gaz (12) et d'un générateur (18) entraîné directement par la turbine à gaz (12), produisant du courant alternatif à une fréquence de fonctionnement et dont la sortie est raccordée à un réseau (21) à fréquence (F) prédéterminée,
un dispositif électronique de découplage (27) étant disposé entre le générateur (18) et le réseau (21) et découplant la fréquence de fonctionnement de la fréquence (F) du réseau,
**caractérisé en ce que**
en cas de modification de longue durée de la fréquence du réseau, la vitesse de rotation mécanique et la vitesse de rotation aérodynamique de la turbine à gaz (12) sont maintenues constantes et la puissance de la turbine à gaz (12) est adaptée sans ralentissement.

2. Procédé selon la revendication 1, **caractérisé en ce qu'**il utilise une turbine à gaz (12) d'une puissance supérieure à 100 MW et comme dispositif électronique de découplage (27) un convertisseur de fréquence qui présente la forme d'un convertisseur matriciel.

3. Procédé selon les revendications 1 ou 2,
**caractérisé en ce que** la fréquence de fonctionnement est nettement différente de la fréquence du réseau ou d'une deuxième fréquence de fonctionnement.

4. Procédé selon la revendication 3, **caractérisé en ce que** la fréquence du réseau et la fréquence de fonctionnement sont de 50 Hz ou 60 Hz.

5. Procédé selon l'une des revendications 1 à 4, **caractérisé en ce que** comme turbine à gaz (12), il utilise une turbine à gaz à combustion séquentielle.

6. Procédé selon la revendication 2, **caractérisé en ce que** le convertisseur matriciel comprend plusieurs commutateurs bidirectionnels asservis (32) disposés en matrice (m x n) et qui relient sélectivement sous la commande d'un régulateur (31) m entrées à n sorties, m étant plus grand que n, des premiers moyens (34) de détermination du signe des courants dans les entrées et des deuxièmes moyens (33) de détermination du signal des tensions entre les entrées étant prévus, les premiers et les deuxièmes moyens (34 ou 33) étant reliés au régulateur (31) par des conducteurs de signalisation (38).

7. Procédé selon la revendication 1, **caractérisé en ce que** le dispositif électronique de découplage (27) permet d'éviter des pointes d'émission en cas de variation de la fréquence du réseau.

8. Procédé selon la revendication 1, **caractérisé en ce que** la vitesse de rotation (n_{mech}) de la turbine à gaz (12) est rehaussée lorsqu'un événement de fréquence basse est anticipé.

9. Procédé selon la revendication 1, **caractérisé en ce que** la vitesse de rotation (n_{mech}) de la turbine à gaz (12) est abaissée lorsqu'un événement de fréquence élevée est anticipé.

10. Procédé selon l'une des revendications 8 ou 9, **caractérisé en ce que** la puissance de la centrale électrique est maintenue constante pendant l'adaptation de la vitesse de rotation de la turbine à gaz (12).

11. Procédé selon la revendication 10, **caractérisé en ce que** la puissance de la centrale électrique est maintenue constante par adaptation de la température d'entrée dans la turbine (Tₕₒₜ) et/ou par réglage des aubes ajustables (42) de guidage du compresseur de la turbine à gaz (12).

12. Procédé selon la revendication 8, **caractérisé en ce que** la puissance de la centrale électrique est maintenue constante avant l'anticipation d'un événement de fréquence basse et est relevée au-delà de la puissance nominale en cas de fréquence basse.
